# EUROPEAN PATENT APPLICATION

(11) **EP 2 799 127 A1**
(43) Date of publication of application: **05.11.2014**
(21) Application number: 11879041.9
(22) Date of filing: 26.12.2011
(51) Int. Cl.: B01D 61/22, B01D 35/157, B01D 36/00

(54) **SYSTEM FOR FLOW CONTROL IN FILTERS**

(71) Applicant: HBio Reto XXI S.l., 48009 Bilbao (ES)
(72) Inventor: RETOLAZA GAVIÑA, Gorka, E-48009 Bilbao (ES)
(74) Representative: Ezcurra Zufia, Maria Antonia
(86) International application number: PCT/ES2011/070903
(87) International publication number: WO 2013/098422

(57) **Abstract**

The invention relates to a system which includes a filtering surface (1) connected with an impulse pump (2) on the intake end thereof for the fluid to be filtered (3), including a pressure-loss valve (13) or an overpressure valve and a flow-limiting controller (12) arranged at the outlet of the filtering surface, optionally including a back flush pump; in the event of being used for tangential filters the pressure-loss valve (13) or the overpressure valve is arranged at the outlet of the filtering surface (1), whereas in blind filters the pressure-loss or overpressure valve (13) is arranged at the intake of the filtering surface (1). A more inexpensive system is achieved which saves on energy consumption. Furthermore, the filtering surface become protected against the operating pressure, in which the impulse pump operates at the design point without increasing the flow or the pressure and the pressure-loss or overpressure valve has a fixed value that cannot vary without action external to the system.

## Description

### OBJECT OF THE INVENTION

The object of the present invention is, as the title of the invention establishes, a system for flow control in filtration processes, also known in the sector as cross-flow filtration or dead end filtration.

The available filters for the flow control system proposed can be membrane filters, cartridge filters, screen filters, or by using any filtering surface.

The means used by the control flow system characterise the present invention, and allow to remove some elements, like pressure switches, pressure transducers, flow meters, frequency converters, flow controller electrovalves, and other elements commonly used in the filtering processes controller systems.

Therefore, the present invention limits itself to the field of filtering processes controller systems with any type of filtering surfaces (cross flow, dead end, flat membranes and any other type of membranes and filters)

### BACKGROUND TO THE INVENTION

In chemistry engineering, biochemistry engineering, proteins purification or water treatment, the cross flow filtration, also known as tangential flow filtration, is a type of filtration.

The cross flow filtration is different from the dead end filtration, here, the flow crosses a filtering surface, and the solids caught in the filter must be released in the other end.

The cross flow filtration is called like this, because the most of the income flow flows tangentially through the filter surface. The main benefit of these types of filters is that the filter, that can blind the flow of the fluid, reduces the deposition of particles in the filtering surface, so the time life of the operation of the filter increases.

The systems for flow control in filters, membrane filters or any other type, need a frequency converter combined with a pump controlling the operating flow, also a flow meter for continuous flow checking, and optionally a flow controller electrovalves, or proportional, to close an IDP control for controlling the operation flow. The IDP control can be set between the pump and the flow meter, or between the flow meter and the electrovalve, or any combination, it is not necessary that all the elements of the control system have to be linked to the IDP control. The IDP control can control the pump power, or also the closing of the electrovalve, or both, in any case, the control will always be set using the reading of the flow meter or the value of the membrane pressure.

Nevertheless, these control systems are liable to be improved by using different means that allow the elimination of pressure switches, pressure transducers, flow meters, frequency converters, flow controller electrovalves, IDP control, even the PLC or programming card can be removed, and achieving money saves in investment and energy consumption.

Other aspect liable to be improved is the protection of the filtering surfaces from the operating pressure, that with the current system, the protection depends on the correct operation of the electronic elements (active protection). By means of the present invention, the safety of the filtering surfaces is guaranteed by the design (passive protection), so the active protection is not necessary.

Therefore, the object of the present invention is to develop a control system for the filtering processes that overcomes the problems indicated above or the aspects liable to be improved, achieving a more inexpensive filtering system, with the filtering surfaces having protection from the operating pressure, developing a system like is described below, and is presented in its essentiality in the first claim.

### DESCRIPTION OF THE INVENTION

The system for flow control in filters consists of a filtering surface combined with a flow-limiting controller, an impulse pump, a backflush pump, a non return valve and a pressure-loss valve or an overpressure valve.

The filters don't have to be membrane one types, they can be cartridge filters, and screen filters, etc., that is, other filters using filtering elements different from membranes.

The fluid to be filtered gets in on one end of the filtering surface, propelled by the impulsion pump. In case of tangential filtration, a pressure-loss valve or an overpressure valve is arranged on the opposite end (outlet of the filter but without filtration), of the fluid intake end. In case of dead end filtration, the pressure-loss valve or the overpressure valve is arranged in the intake flow. A flow-limiting controller is arranged at the outlet of the filtered fluid (filter outlet after filtration) with no power supply needed.

The flow-limiting controller is a device for limiting the flow of a fluid, in this case, the flow of the fluid to filter. It clogs the fluid in case of receiving more flow than expected, taking the flow to the design value.

The process of backflush is carried out by means of the backflush pump that impulses a fluid through the filtrating surface of the filter in the opposite direction of the flow to filter, so it releases and cleans the filtrating surface. This operation of cleaning of the filtrating surface can be carry out without closing the electrovalve because the backflush is always done with greater flow than the operating one, so although part of the fluid follows the filtering circuit, the backflush keeps working.

The flow-limiting controller clogs the fluid to avoid the circulation of more water than the designed and produces the corresponding pressure-loss, therefore, the pressure-loss in the process will be the produced in the outlet of the concentrated by means of the pressure-loss valve or the overpressure valve minus the produced by the flow-limiting controller, in this way the filtering surfaces achieve protection against the operating pressure, because this pressure will never be higher than the value of the pressure-loss valve or the overpressure valve that is in the concentrated. This is like this because in this design, the outlet is free, at atmospheric pressure, after the pressure-loss valve (or the overpressure valve) of the concentrated. If it wasn't like this, this maximum value of pressure couldn't probably meet.

### DESCRIPTION OF THE DRAWINGS

To supplement the descriptive report that is been setting, and to help a better comprehension of the characteristics of the invention, according to a preferred embodiment of the invention, a set of drawings is included in this descriptive report, a set of drawings where with illustrative nature, but not restrictive, has been shown the next things.

In figure 1 we can see a diagram of a system for flow control in tangential or cross flow filters, in the way is carried out up to now.

In figure 2 we can see a diagram of a system for flow control in blind or dead end filters, in the way is carried out up to now.

In figure 3 we can see the system for flow control in tangential filters like the one that is object of the invention.

In figure 4 we can see the system for flow control in blind filters like the one that is object of the invention.

### PREFERRED EMBODIMENT OF THE INVENTION

Considering the drawings, a preferred embodiment of the proposal invention is described below.

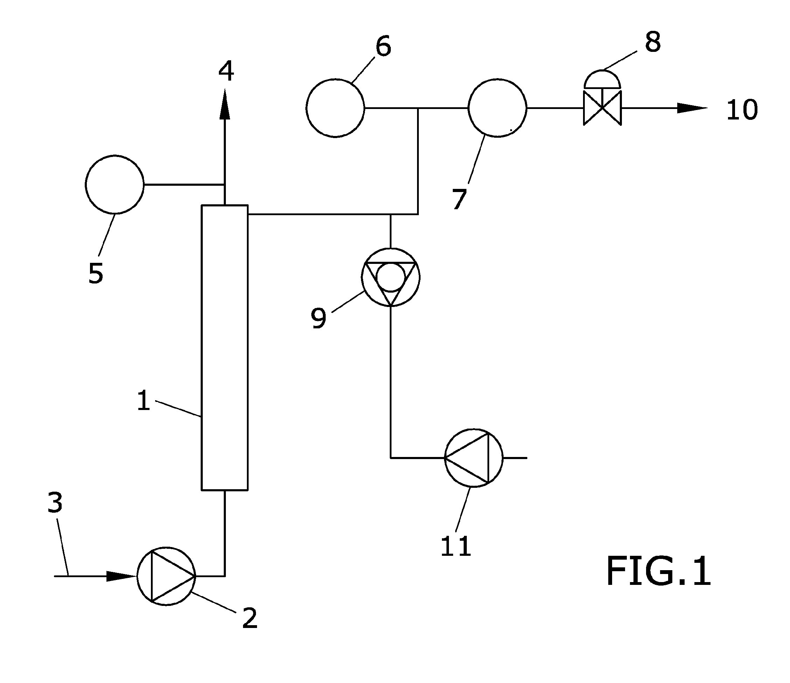

In figure 1 we can see the configuration of the control system currently used in tangential filters, including a filtering surface (1) connected with an impulse pump (2) on the intake end thereof for the fluid to be filtered (3); a backflush pump (11) is connected at the outlet of the filtered fluid, and there is a non return valve (9) between the backflush pump (11) and the outlet.

The filtering surface (1) has the outlet of the concentrated fluid (4) on the opposite end of the intake of the fluid to be filtered (3), and a first pressure transducer (5) is associated to this outlet; there is a second outlet of the filtering surface (1), where a flow meter (7) is arranged, followed by an electrovalve (8) and the filtered fluid (10) outlets through it. There is also arranged at the filtered fluid outtake a second pressure transducer (6).

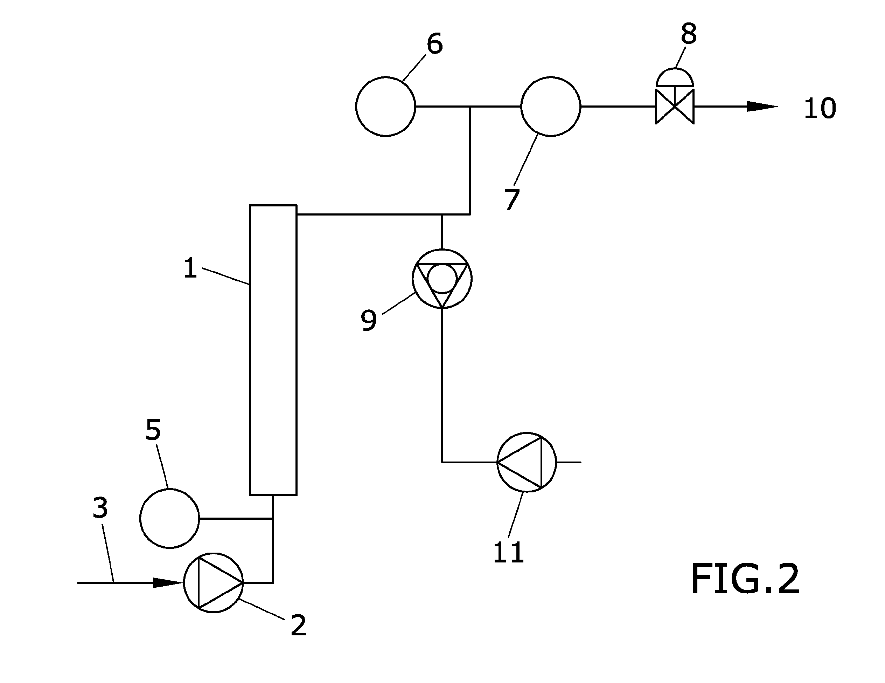

In figure 2 we can see the configuration of the control system used in blind filters. This configuration is similar as shown in figure 1, but it has no outlet of the concentrated fluid (4), as it happened with the tangential filters, and where the first pressure transducer (5) is arranged at the intake.

In both embodiments shown in figures 1 and 2, the impulse pump operates controlled by an IDP control, it increases its power to reach the target value of the flow, (measured by the flow meter), and/or the controller electrovalve changes its passing section. Besides in both embodiments, when the filtering surface is getting saturated, the pressure behind the membrane increases, and there is a maximum acceptable value of difference between the readings of the pressure transducer (5) and (6).

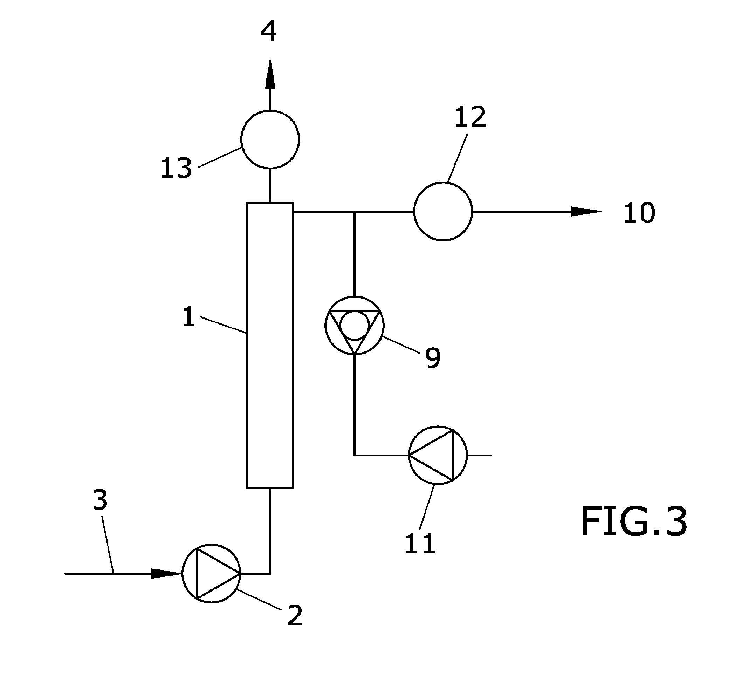

In figure 3 we can see the configuration of the control system in tangential filters, including a filtering surface (1) connected with an impulse pump (2) on the intake end thereof for the fluid to be filtered (3); a backflush pump (11) is connected at the outlet of the filtered fluid by means of a non return valve (9); on the other side, a pressure-loss valve (13) or an overpressure valve is arranged at the outlet of the concentrated fluid (4), and a flow-limiting controller (12) is arranged at the outlet of the filtered fluid. The relative positions of the flow-limiting controller (12) and the pressure-loss valve (13) can be exchanged.

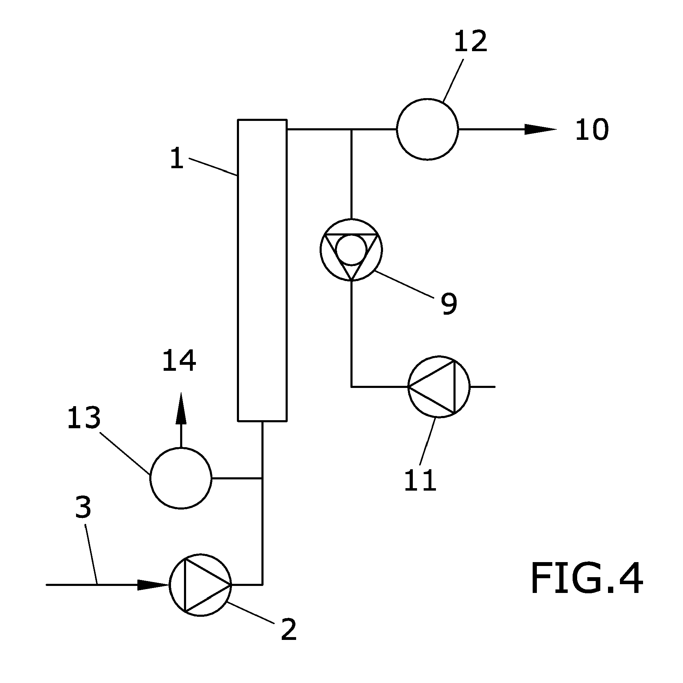

In figure 4 we can see the configuration of the control system in blind filters, which almost totally shares the essence of the object of the invention. It is different from the tangential filters configuration in that as there is no outlet of concentrated fluid, the pressure-loss valve (13) or the overpressure valve is arranged at the inlet of the filtering surface, behind the impulse pump (2) of the fluid to be filtered (3). Behind the pressure-loss valve (13) or the overpressure valve, it is obtained a non filtrated fluid (14). The same as the previous embodiment, the relative positions of the flow-limiting controller (12) and the pressure-loss valve (13) can be exchanged.

By means of using a flow-limiting controller (12) and a pressure-loss valve (13), the pressure switches / pressure transducers (5) and (6), the flow meter (7), the controller electrovalve (8) and the IDP control of this electrovalve can be removed. The elimination of these elements, in addition to the consequent money savings due to its unnecessary installation, also has an additional inexpensive advantage because it has no power consume.

The backflush process is carried out by stopping the impulse pump for the filtering, and starting the backflush pump. In this operation, the backflush fluid will run towards the flow-limiting controller (12). This controller will limit the flow once again, and therefore, the rest of the flow will run in the opposite direction of the filtration, so the backflush of the filtering surface is achieved.

Furthermore, in both embodiments shown in figures 3 and 4, the impulse pump operates at an operation point, without any changes, called design point, so the flow meter, the frequency converter and the IDP control for the pump can be removed. On the other side, the maximum pressure behind the membrane is the reading of the pressure-loss valve or the overpressure valve, while the operating pressure behind the membrane is the reading of the pressure-loss valve or the overpressure valve minus the pressure-loss produced by the flow-limiting controller

Therefore, thanks to the described system, there are achieved an economic saving due to the unnecessary installation of the mentioned elements, also a power consumption saving because the flow-limiting controller has no power consumption, opposite to the needed elements beforehand used. On the other side, the filtering surfaces have protection against the operation pressure because the flow-limiting controller generates the pressure-loss enough to avoid the circulation of more water than the defined in design, the pump operates at the design point without increasing the flow or the pressure and the pressure-loss valve or the overpressure valve has a fixed value that cannot vary without action external to the system. In addition, the system for flow control in filters object of the invention doesn't need any logic control (PLC, IPD, controller, card...) to self-control and operates always in optimal conditions, riskless for the filtering surfaces.

In the preferred embodiment, is mentioned a filtering surface, because the filters has not to be necessary membrane ones, they can also be cartridge filters, screen filters, or use any other filtering surface.

Once is sufficiently described the nature of the present invention, as well as the way to put it in practice, is stated that, inside its essentiality, it will can be put in practice in other ways of embodiments, different in detail from the indicated as the example, and the protection demanded will reach them too if the essential principle of the invention is not modified.

## Claims

1. System for flow control in filters **characterised in that** includes:
- a filtering surface (1) connected with an impulse pump (2) on the intake end thereof for the fluid to be filtered (3);
- includes a pressure-loss valve (13) or an overpressure valve;
- a flow-limiting controller (12)

2. System for flow control in filters, according to claim 1, **characterised in that** in case that it's used for tangential or cross-flow filtration, the pressure-loss valve (13) or the overpressure valve is arranged at the outlet of the filtering surface (1), and the concentrated fluid (4) outlets through this pressure-loss valve (13) or the overpressure valve, while the flow-limiting controller (12) is arranged at the outlet of the filtering surface, the relative positions of the pressure-loss valve (13) or the overpressure valve and the flow-limiting controller (12) can be exchanged from the ones indicated first.

3. System for flow control in filters, according to claim 2, **characterised in that** in case that it's used for blind or dead end filtration, the pressure-loss valve (13) or the overpressure valve is arranged at the intake of the filtering surface (1), behind the impulse pump (2), and a non filtrated fluid outlets through this valve (13), while the flow-limiting controller (12) is arranged at the outlet of the filtering surface, the relative positions of the pressure-loss valve (13) or the overpressure valve and the flow-limiting controller (12) can be exchanged from the ones indicated first.

4. System for flow control in filters, according to claims 2 or 3, **characterised in that** includes a backflush pump (11) connected at the outlet of the filtered fluid (10), by means of a non return valve (9) arranged between the outlet of the filtered fluid (10) and the backflush pump (11).

5. System for flow control in filters, according to any of the previous claims, **characterised in that** the filtering surface (1) is a membrane, being applicable the control system for membrane filters.

6. System for flow control in filters, according to any of the previous claims 1 to 4 , **characterised in that** the filtering surface (1) is a cartridge, being applicable the control system for cartridge filters.

7. System for flow control in filters, according to any of the previous claims 1 to 4 , **characterised in that** the filtering surface (1) is a screen, being applicable the control system for screen filters.
